(19) Europäisches Patentamt
European Patent Office
Office européen des brevets

(11) EP 1 605 757 B1

(12) EUROPÄISCHE PATENTSCHRIFT

(45) Veröffentlichungstag und Bekanntmachung des Hinweises auf die Patenterteilung:
**25.07.2012 Patentblatt 2012/30**

(21) Anmeldenummer: **04719990.6**

(22) Anmeldetag: **12.03.2004**

(51) Int Cl.:
***A01N 43/40*** ***(2006.01)*** *A01N 57/20* *(2006.01)*
*A01N 47/34* *(2006.01)* *A01N 47/22* *(2006.01)*
*A01N 47/20* *(2006.01)* *A01N 47/12* *(2006.01)*
*A01N 43/90* *(2006.01)* *A01N 43/88* *(2006.01)*
*A01N 43/80* *(2006.01)* *A01N 43/58* *(2006.01)*
*A01N 43/56* *(2006.01)* *A01N 43/54* *(2006.01)*
*A01N 43/42* *(2006.01)* *A01N 43/40* *(2006.01)*
*A01N 43/10* *(2006.01)* *A01N 37/46* *(2006.01)*
*A01N 37/44* *(2006.01)* *A01N 37/40* *(2006.01)*
*A01N 37/34* *(2006.01)* *A01N 37/30* *(2006.01)*
*A01N 37/26* *(2006.01)*

(86) Internationale Anmeldenummer:
**PCT/EP2004/002633**

(87) Internationale Veröffentlichungsnummer:
**WO 2004/081129 (23.09.2004 Gazette 2004/39)**

# (54) PICOLINAFEN ENTHALTENDE HERBIZIDE MISCHUNGEN

HERBICIDAL MIXTURES CONTAINING PICOLINAFEN

MELANGES HERBICIDES CONTENANT DU PICOLINAFEN

(84) Benannte Vertragsstaaten:
**AT BE BG CH CY CZ DE DK EE ES FI FR GB GR HU IE IT LI LU MC NL PL PT RO SE SI SK TR**

(30) Priorität: **13.03.2003 US 453975 P**

(43) Veröffentlichungstag der Anmeldung:
**21.12.2005 Patentblatt 2005/51**

(60) Teilanmeldung:
**10175390.3 / 2 258 186**
**10175393.7 / 2 258 187**
**10175396.0 / 2 258 188**
**10175397.8 / 2 258 189**

(73) Patentinhaber: **BASF SE**
**67056 Ludwigshafen (DE)**

(72) Erfinder:
- **ZAGAR, Cyrill**
  **68167 Mannheim (DE)**
- **BURNHAMS, Adam, F.**
  **Cary, NC 27511 (US)**
- **DOMBO, Peter**
  **65207 Wiesbaden (DE)**
- **LANDES, Andreas**
  **67354 Römerberg-Heiligenstein (DE)**
- **SIEVERNICH, Bernd**
  **67454 Hassloch (DE)**
- **VANTIEGHEM, Herve, R.**
  **76297 Stutensee (DE)**

(56) Entgegenhaltungen:
**EP-A- 0 043 349** **EP-A- 0 208 245**
**EP-A- 0 273 669** **EP-A- 0 347 950**
**EP-A- 0 381 907** **WO-A-00/78147**
**WO-A-01/26466** **WO-A-01/35740**
**WO-A-01/74157** **WO-A-02/15694**
**WO-A-94/07368** **DE-A- 2 217 722**
**DE-A- 3 536 035** **US-A- 3 537 840**
**US-A- 3 884 672** **US-A- 5 665 673**
**US-A- 5 877 116** **US-A- 5 877 117**
**US-A1- 2002 039 968**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 605 757 B1

- C.D.S.TOMLIN (ED.): "The Pesticide Manual, Twelfth Edition" 2000, BRITISH CROP PROTECTION COUNCIL , , FARNHAM, GB; , XP002293728 ISBN: 1-901396-12-6 Seite 742-743, Eintrag 621. "picolinafen"; Abschnitt "Nomenclature-Development codes" zitiert zur Klärung der Identität der in den Beispielen der obengenannten Veröffentlichung WO94/07368 verwendeten Verbindung "WL 161616" cited to clarify the identity of the compound "WL 161616" used in the examples of document WO94/07368 cited above

## Beschreibung

Die vorliegende Erfindung betrifft eine herbizide Mischung enthaltend

A) Picolinafen (I)

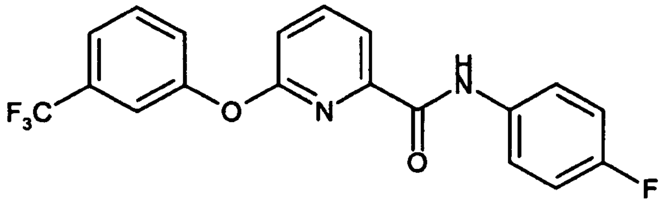

(I)

oder dessen landwirtschaftlich brauchbaren Salze;
und
B) mindestens ein weiteres Herbizid, ausgewählt aus der Gruppe der Benzoesäuren
und gewünschtenfalls
C) ein Safener ausgewählt aus der Gruppe Isoxadifen, Mefenpyr und Cloquintocet.

Außerdem betrifft die Erfindung herbizide Mittel, enthaltend eine Mischung aus den Komponenten A und B und gewünschtenfalls der Komponente C, sowie mindestens eines flüssigen und/oder festen Trägerstoffes und gewünschtenfalls mindestens eines grenzflächen-aktiven Stoff.

Des weiteren betrifft die Erfindung Verfahren zur Herstellung dieser Mischungen bzw. Mittel sowie Verfahren zur Bekämpfung von unerwünschten Pflanzenwuchs.

Aus WO 94/07368, WO 01/26466, WO 01/35740, WO 01/74157 sowie WO 00/78147 sind Mischungen von Picolinamiden mit weiteren speziellen Herbiziden bekannt. US 5,665,673 offenbart unter anderem Mischungen von Diflufenzopyr mit Dicamba. EP 347 950 offenbart unter anderem Mischungen von Chloramben mit Sulcotrione. Mischungen von Dicamba und Chloramben mit Phenoxyphenylpyrimidinen werden in WO 02/15694 beschrieben. Aus US 2002/39968 sind u. a. Formulierungen von Picolinofen mit festen Trägerstoffen bekannt. Es ist grundsätzlich bei Pflanzenschutzmitteln wünschenswert, die spezifische Wirkung eines Wirkstoffes zu erhöhen und die Wirksicherheit zu steigern. Der vorliegende Erfindung lag daher die Aufgabe zugrunde, die Wirkung von Picolinafen zu erhöhen.

Demgemäß wurden die eingangs definierten Mischungen gefunden. Des weiteren wurden herbizide Mittel gefunden, die diese Mischungen enthalten, sowie Verfahren zu deren Herstellung und Verfahren zur Bekämpfung von unerwünschten Pflanzenwuchs. Bei letztgenannten Verfahren ist es unerheblich, ob die Komponenten A, B und gewünschtenfalls C gemeinsam oder getrennt formuliert und ausgebracht werden und in welcher Reihenfolge die Applikation bei getrennter Ausbringung erfolgt.

Die erfindungsgemäßen Mischungen zeigen einen synergistischen Effekt; die Verträglichkeit der herbizid wirksamen Komponenten A) und B) für bestimmte Kulturpflanzen bleibt dabei im allgemeinen erhalten. Es kann jedoch wünschenswert sein eine Komponente C), in einer Menge, die einen Safening Effekt zeigt, einzusetzen.

Als Herbizide in Kombination mit Picolinafen A) und gewünschtenfalls der Komponente C) werden Benzoesäuren, z. B. Chloramben oder Dicamba verwendet;
sowie deren landwirtschaftlich brauchbaren Salze, oder sofern es sich um Carbonsäuren handelt, deren landwirtschaftlich brauchbaren Ester, Thioester oder Amide.

Picolinafen ist bekannt aus EP 447 004.

Die Herbizide der Komponente B) sind bekannt aus "Short Review of Herbicides & PGRs" 1991, Hodogaya Chemicals.

Die Safener der Komponente C) sind bekannt aus

- B. Hock, C. Fedtke, R.R. Schmidt, 1. Auflage, Thieme 1995 (Cloquinocet (S. 266));
- Agrow 293 (28.11.97) (Mefenpyr);
- Agrow 324 (12.03.99) (Isoxadifen).

Die Wirkstoffe der vorliegenden Erfindung können in Form der reinen Enantiomere als auch als Racemate oder Diastereomerengemische vorliegen bzw. verwendet werden.

Weiterhin können die Wirkstoffe in Form ihrer landwirtschaftlichen brauchbaren Salze und soweit es sich um Carbonsäuren handelt ebenso in Form ihrer landwirtschaftlichen brauchbaren Ester, Thioester und Amide verwendet werden.

Im allgemeinen kommen die Salze derjenigen Kationen, die Säureadditionssalze derjenigen Säuren oder die Ester, Thioester und Amide in Betracht, deren Kationen bzw. Anionen bzw. Ester, Thioester und Amide, die herbizide Wirkung bzw. die Safening Wirkung nicht negativ beeinträchtigen.

Es kommen als Kationen insbesondere Alkalimetallkationen, wie Lithium, Natrium oder Kalium oder Erdalkalimetallkationen, wie Magnesium oder Calcium in Betracht. Weiterhin kommen organische Kationen wie Phosphoniumionen, Sulfoniumionen, vorzugsweise Tri-($C_1$-$C_4$-alkyl)sulfonium, wie Trimethylsulfonium, Sulfoxoniumionen, vorzugsweise Tri-($C_1$-$C_4$-alkyl)sulfoxonium verwendet werden. Ebenso kommt Ammonium, wobei hier gewünschtenfalls ein bis vier Wasserstoffatome durch $C_1$-$C_4$-Alkyl, Hydroxy-$C_1$-$C_4$-alkyl, $C_1$-$C_4$-Alkoxy-$C_1$-$C_4$-alkyl, Hydroxy-$C_1$-$C_4$-alkoxy-$C_1$-$C_4$-alkyl, Phenyl oder Benzyl ersetzt sein können, vorzugsweise Ammonium, Methylammonium, Dimethylammonium, Trimethylammonium, Tetramethylammonium, Tetraethylammonium, Isopropylammonium, Diisopropylammonium, Tetrabutylammonium, Ethanolammonium, Diethanolammonium, 2-(2-Hydroxy-ethoxy)ethylammonium, Benzyltrimethylammonium oder Benzyltriethylammonium, in Betracht.

Anionen von brauchbaren Säureadditionssalzen sind in erster Linie Halogenide, wie Fluoride, Chloride, Bromide oder Iodide, Nitrate, Hydrogensulfate, Sulfate, Dihydrogenphosphate, Hydrogenphosphate, Phosphate, Methylsulfate, Hydrogencarbonate und Carbonate.

Als Ester kommen beispielsweise geradkettige oder verzweigte $C_1$-$C_{10}$-Alkylester, insbesondere Methyl-, Ethyl-, Propyl-, Isopropyl-, Butyl-, Isobutyl- oder Isooctylester, oder geradkettige oder verzweigte $C_1$-$C_4$-Alkoxy-$C_1$-$C_4$-alkylester, insbesondere Methoxyethyl-, Ethoxyethyl- oder Butoxyethylester in Betracht. Thioester sind beispielsweise die geradkettigen oder verzweigten $C_1$-$C_{10}$-Alkylthioester, insbesondere Ethylthioester. Als Amide können u.a. Methyl- oder Dimethylamide verwendet werden, sowie Anilide, wie beispielsweise das Anilid selbst oder 2-Chloranilid.

In einer bevorzugten Ausführungsform enthält die erfindungsgemäße herbizide Mischung

A) Picolinafen, oder dessen landwirtschaftlich brauchbares Salz;
und
B) mindestens ein weiteres Herbizid ausgewählt aus der Gruppe Chloramben und Dicamba,

sowie dessen landwirtschaftlich brauchbares Salz, oder sofern es sich um Carbonsäure handelt, dessen landwirtschaftlich brauchbaren Ester, Thioester oder Amid.

Außerordentlich bevorzugt sind herbizide Mischungen enthaltend Picolinafen + Dicamba.

Ist der Wirkstoff Dicamba Bestandteil der Mischung, sind ebenso diejenigen Mischungen bevorzugt bei denen der voranstehend genannte Wirkstoff als Trimethylsulfonium-, Ammonium-, Natrium-, Kalium-, Magnesium- oder Calciumsalze vorliegt.

Ist der Wirkstoff Dicamba Bestandteil der Mischung sind ebenso diejenigen Mischungen bevorzugt bei denen der voranstehend genannte Wirkstoff durch seine Ethanolammonium-, Diethanolammonium-, Methylammonium-, Dimethyl-ammonium-, Trimethylammonium-, Isopropylammonium- oder 2-(2-Hydroxyeth-oxy)-ethylammonium-Salze, seine Methyl- oder Dimethylamide, seine Anilide oder 2-Chloranilide, seine Methyl-, Ethyl, Propyl-, Isopropyl-, Butyl-, Isobutyl-, Isooctyl-, Methoxyethyl-, Ethoxyethyl-, Butoxyethyl-Ester oder seine Ethylthioester ersetzt wird.

In einer weiteren besonders bevorzugten Ausführungsform enthält die erfindungsgemäße herbizide Mischung

A) Picolinafen, oder dessen landwirtschaftlich brauchbares Salz
und
B) mindestens ein weiteres Herbizid, ausgewählt aus der Gruppe Benzoesäuren, z. B. Chloramben oder Dicamba; sowie dessen landwirtschaftliche brauchbares Salz, oder sofern es sich um Carbonsäuren handelt, dessen landwirtschaftlich brauchbaren Ester, Thioester oder Amid;
und
C) ein Safener ausgewählt aus der Gruppe Isoxadifen, vorzugsweise Isoxadifen "Säure" oder Isoxadifen-ethyl, insbesondere Isoxadifen-ethyl; Mefenpyr, vorzugsweise Mefenpyr "Säure" oder Mefenpyr-diethyl, insbesondere Mefenpyr-diethyl; und Cloquintocet, vorzugsweise Cloquintocet "Säure", Cloquintocet-mexyl oder Cloquintocet-mexyl x n Hydrat (n = 2 bis 6), insbesondere Cloquintocet-mexyl.

In einer besonders bevorzugten Ausführungsform enthält die herbizide Mischung

A) Picolinafen, oder dessen landwirtschaftlich brauchbares Salz;
und
B) Dicamba, oder dessen landwirtschaftliches Salz, oder dessen landwirtschaftlich brauchbaren Ester, Thioester oder Amid;
und
C) Isoxadifen-ethyl.

In einer weiteren besonders bevorzugten Ausführungsform enthält die herbizide Mischung

A) Picolinafen, oder dessen landwirtschaftlich brauchbares Salz;
und
B) Dicamba, oder dessen landwirtschaftliches Salz, oder dessen landwirtschaftlich brauchbaren Ester, Thioester oder Amid;
und
C) Mefenpyr-diethyl;

In einer weiteren besonders bevorzugten Ausführungsform enthält die herbizide Mischung

A) Picolinafen, oder dessen landwirtschaftlich brauchbares Salz;
und
B) Dicamba, oder dessen landwirtschaftliches Salz, oder dessen landwirtschaftlich brauchbaren Ester, Thioester oder Amid;
und
C) Cloquintocet, vorzugsweise Cloquintocet "Säure", Cloquintocet-mexyl oder Cloquintocet-mexyl x n Hydrat (n = 2 bis 6), insbesondere Cloquintocet-mexyl.

In einer weiteren bevorzugten Ausführungsform enthält die herbizide Mischung neben Picolinafen nur ein weiteres Herbizid ausgewählt aus der Gruppe B).

Die entsprechenden Bevorzugungen gelten in Analogie zu den obigen Ausführungen.

In einer weiteren bevorzugten Ausführungsform enthält die herbizide Mischung neben Picolinafen nur ein weiteres Herbizid ausgewählt aus der Gruppe B) und nur einen Safener ausgewählt aus der Gruppe C).

Die entsprechenden Bevorzugungen gelten in Analogie zu den obigen Ausführungen.

Die Komponenten A und B werden in einer synergetisch wirksamen Menge appliziert, üblicherweise liegen die Mischungsverhältnisse der Komponenten A) zu B) in einem Gewichtsverhältnis von 1:0,1 bis 1:50, bevorzugt von 1:0,2 bis 1:20.

Wird ein Safener C) mitverwendet, so liegen die Mischungsverhältnisse der Komponenten A) zu B) zu C) in einem Gewichtsverhältnis von 1:0,1:0,1 bis 1:50:10, bevorzugt von 1:0,2:0,2 bis 1:20:4.

Die vorliegende Erfindung ist auch auf herbizide Mittel gerichtet, die eine herbizid wirksame Menge einer herbiziden Mischung (enthaltend die Komponenten A) und B) sowie gewünschtenfalls C) wie voranstehend beschrieben), mindestens einen flüssigen und/oder festen Trägerstoff und gewünschtenfalls mindestens einen grenzflächenaktiven Stoff enthalten.

Die erfindungsgemäßen herbiziden Mischungen und herbiziden Mittel können in Kulturen wie Mais, Getreide, Reis und Soja, insbesondere in Getreide, Unkräuter und Schadgräser sehr gut bekämpfen, ohne die Kulturpflanze zu schädigen; ein Effekt, der vor allem auch bei niedrigen Aufwandmengen auftritt.

Unter Berücksichtigung der Vielseitigkeit der Applikationsmethoden können die erfindungsgemäßen synergistischen herbiziden Mischungen und herbiziden Mittel noch in einer weiteren Zahl von Kulturpflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalis, Beta vulgaris spp. altissima, Beta vulgaris spp. rapa, Brassica napus var. napus, Brassica napus var. napo-brassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Darüber hinaus können die erfindungsgemäßen herbiziden Mischungen und herbiziden Mittel auch in Kulturen, die durch Züchtung, einschließlich gentechnischer Methoden, gegen die Wirkung von Herbiziden tolerant sind, verwandt werden. In Betracht kommen vorzugsweise gentechnisch veränderte Getreidepflanzen, die gegen Glyphosate oder gegen herbizide ALS-Inhibitoren, wie beispielsweise Sulfonylharnstoffe oder Imidazolinone resistent sind.

Die erfindungsgemäßen Mischungen, bzw. die sie enthaltenden herbiziden Mittel können beispielsweise in

Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden.

Die Anwendungsformen richten sich nach den Verwendungszwecken; sie sollten in jedem Fall möglichst die feinste Verteilung der erfindungsgemäßen Wirkstoffe gewährleisten.

Die herbiziden Mittel enthalten die Komponenten A) und B) sowie gewünschtenfalls C) und die für die Formulierung von Pflanzenschutzmitteln üblichen Hilfsstoffe.

Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphthaline oder deren Derivate, alkylierte Benzole oder deren Derivate, Alkohole wie Methanol, Ethanol, Propanol, Butanol, Cyclohexanol, Ketone wie Cyclohexanon, stark polare Lösungsmittel, wie N-Methylpyrrolidon oder Wasser in Betracht.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Komponenten A), B) und gewünschtenfalls C) als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als grenzflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Konden-sationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxy-ethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylen-oxid-Kondensate, ethoxyliertes Rizinusöl, Polyoxyethylenalkyl-ether oder Polyoxypropylenalkylether, Laurylalkoholpolyglykol-etheracetat, Sorbitester, Lignin-Sulfitablaugen oder Methyl-cellulose in Betracht.

Pulver-, Streu- und Stäubemittel können durch Mischen oder gemeinsames Vermahlen der synergistischen herbiziden Mischung bzw. der einzelnen Wirkstoffe mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der erfindungsgemäßen Mischungen in den anwendungsfertigen Zubereitungen können in weiten Bereichen variiert werden. Im allgemeinen enthalten die Formulierungen etwa von 0,001 bis 98 Gew.-%, vorzugsweise 0,01 bis 95 Gew.-%, insbesondere 0,5 bis 90 Gew.-%, an Wirkstoffen.

Die Wirkstoffe der Komponenten A) und B) sowie gewünschtenfalls C) können gemeinsam, aber auch getrennt formuliert werden und/oder gemeinsam oder getrennt auf die Pflanzen, deren Lebensraum und/oder Samen ausgebracht werden. Bevorzugt werden die Wirkstoffe gleichzeitig appliziert. Es ist aber auch möglich diese getrennt auszubringen.

Außerdem kann es von Nutzen sein, die erfindungsgemäßen herbiziden Mischungen bzw. herbiziden Mittel noch mit weiteren Pflanzenschutzmitteln gemeinsam oder getrennt anzuwenden, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die Applikation der erfindungsgemäßen Mischungen und herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die erfindungsgemäßen herbiziden Mittel werden bei der Nachauflaufbehandlung den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low Volume"- und "Ultra-low-Volume"-Verfahren ist ebenso möglich wie ihre Applikation in Form von sogenannten Granulaten.

Die erforderliche Aufwandmenge an reiner Wirkstoffmischung, d.h. A) und B) sowie gewünschtenfalls C) ohne Formulierungshilfsmittel beträgt je nach Zusammensetzung des Pflanzenbestandes, in Abhängigkeit der Entwicklungsstadien der Pflanzen, der klimatischen Verhältnisse sowie der Anwendungstechnik, im allgemeinen 0,001 bis 3,0 kg/ha,

vorzugsweise 0,01 bis 2,5 kg/ha, insbesondere 0,01 bis 1,0 kg/ha aktive Substanz (s.S.)
Die Aufwandmenge von Picolinafen beträgt in der Regel von 0,01 bis 0,5 kg/ha aktive Substanz (a.S.).
Die Aufwandmenge der Komponente B) beträgt in der Regel von 0,01 bis 2,0 kg/ha aktive Substanz (a.S.).
Die Aufwandmenge der Komponente C) beträgt in der Regel von 0,01 bis 0,5 kg/ha aktive Substanz (a.S.).

Anwendungsbeispiele

Die Applikation der erfindungsgemäßen Mischungen erfolgte im Vorauflaufverfahren oder im Nachauflaufverfahren (Blattbehandlung).
Es handelte sich teils um Gewächshausversuche und teils um Freilandversuche auf Kleinparzellen (auf einem Standort mit sandigem Lehm (pH 6.2 bis 7.0) bzw. sandigem Ton (pH 5.0 bis 6.7) als Boden).
Die Schadpflanzen hatten unterschiedliche Größen und Entwicklungsstadien, im Durchschnitt hatten sie 5 bis 20 cm je nach Wuchsform.
Die herbizid wirksamen Verbindungen der Komponenten A) und B) sowie gewünschtenfalls der Safener C) wurden nacheinander oder gemeinsam, letzteres teils als Tankmischung, teils in Fertigformulierung, ausgebracht. Und zwar in Form von Emulsionen, wäßrigen Lösungen oder Suspensionen, wobei als Verteilungsmittel Wasser (300 - 400 l/ha) diente. Bei den Freilandversuchen erfolgte die Ausbringung mit Hilfe einer fahrbaren Parzellenspritzmaschine.
Die Versuchsperiode erstreckte sich über 3 bis 8 Wochen, wobei die Bestände auch noch zu späteren Zeiten beobachtet wurden.

Die Schädigung durch die herbiziden Mittel wurde anhand einer Skala von 0 % bis 100 % im Vergleich zu unbehandelten Kontrollparzellen bewertet. Dabei bedeutet 0 keine Schädigung und 100 eine völlige Zerstörung der Pflanzen.

In den folgenden Beispielen wird die Wirkung der erfindungsgemäß verwendbaren herbiziden Mittel gezeigt, ohne die Möglichkeit weiterer Anwendungen auszuschließen.

Bei diesen Beispielen wurde nach der Methode von S. R. Colby (Calculating synergistic and antagonistic responses of herbicid combinations, Weeds 15, 20 ff (1967)) derjenige Wert E errechnet, der bei einer nur additiven Wirkung der Einzelwirkstoffe zu erwarten ist.

Die Berechnung erfolgt nach

$$E = X + Y - \frac{XY}{100}$$

wobei

X = Prozentsatz der herbiziden Wirkung von Komponente A) bei einer Aufwandmenge a;
Y = Prozentsatz der herbiziden Wirkung von Komponente B) bei einer Aufwandmenge b;
E = zu erwartende herbizide Wirkung der Komponenten A) + B) bei Aufwandmengen a + b (in %);

bedeuten.

Ist der beobachtete Wert höher als der nach Colby errechnete Wert E, so liegt eine synergistische Wirkung vor.

Die erfindungsgemäßen herbiziden Mischungen, wie beispielsweise Picolinafen + Dicamba haben bei entsprechenden Aufwandmengen im Nachauflauf eine höhere herbizide Wirkung als nach Colby auf Grund der beobachteten Wirkungen der Einzelkomponenten bei alleiniger Anwendung zu erwarten wäre.

## Patentansprüche

1. Herbizide Mischung, enthaltend

    A) Picolinafen (I)

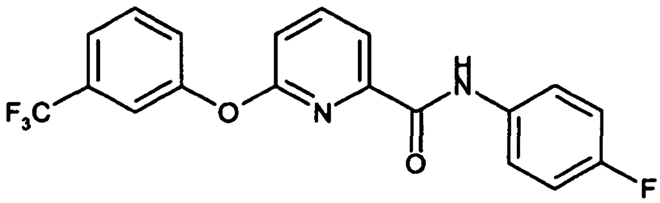

(I)

oder dessen landwirtschaftlich brauchbaren Salze,
und
B) mindestens ein weiteres Herbizid ausgewählt aus der Gruppe der Benzoesäuren

in synergistisch wirksamen Mengen und Mengenverhältnissen.

2. Herbizide Mischung nach Anspruch 1, enthaltend als Komponente B) mindestens eine herbizide Verbindung aus der Gruppe Chloramben und Dicamba;
sowie deren landwirtschaftlich brauchbaren Salze, oder sofern es sich um Carbonsäuren handelt, deren landwirtschaftlich brauchbaren Ester, Thioester oder Amide.

3. Herbizide Mischung nach den Ansprüchen 1 oder 2, enthaltend als Komponente B) Dicamba.

4. Herbizide Mischung nach den Ansprüchen 1 bis 3, enthaltend als Komponente C) einen Safener ausgewählt aus der Gruppe Isoxadifen, Mefenpyr und Cloquintocet.

5. Herbizide Mischung nach den Ansprüchen 1 bis 3, **dadurch gekennzeichnet, daß** die Komponente A) und die Komponente B) in einem Gewichtsverhältnis von 1:0,1 bis 1:50 vorliegen.

6. Herbizide Mischung nach Anspruch 4, **dadurch gekennzeichnet, daß** die Komponente A), die Komponente B) und die Komponente C) in einem Gewichtsverhältnis von 1:0,1:0,1 bis 1:50:10 vorliegen.

7. Herbizide Mittel, enthaltend eine herbizid wirksame Menge einer Mischung gemäß den Ansprüchen 1 bis 6, mindestens einen inerten flüssigen und/oder festen Trägerstoff und gewünschtenfalls mindestens einen grenzflächenaktiven Stoff.

8. Verfahren zur Herstellung von herbiziden Mitteln nach Anspruch 7, **dadurch gekennzeichnet, daß** man Komponente A, Komponente B) und gewünschtenfalls C), mindestens einen inerten flüssigen und/oder festen Trägerstoff und gewünschtenfalls einen grenzflächenaktiven Stoff mischt.

9. Verfahren zur Bekämpfung unerwünschten Pflanzenwuchses, **dadurch gekennzeichnet, daß** man eine herbizide Mischung gemäß den Ansprüchen 1 bis 6 vor, während und/oder nach dem Auflaufen von unerwünschten Pflanzen ausbringt, wobei die Komponenten A), B) und gewünschtenfalls C) gleichzeitig, gemeinsam oder getrennt, oder nacheinander appliziert werden können.

10. Verfahren zur Bekämpfung unerwünschten Pflanzenwuchses gemäß Anspruch 9, **dadurch gekennzeichnet, daß** die Blätter der Kulturpflanzen und der unerwünschten Pflanzen behandelt werden.

## Claims

1. A herbicidal mixture, comprising

A) picolinafen (I)

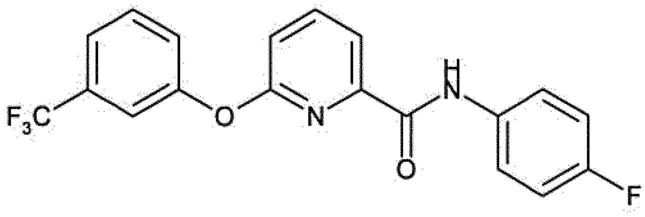

(I)

or an agriculturally useful salt thereof,
and
B) at least one further herbicide selected from the group of the benzoic acids

in synergistically effective amounts and amount ratios.

2. A herbicidal mixture according to claim 1, comprising as component B) at least one herbicidal compound from the group of chloramben and dicamba;
and an agriculturally useful salt thereof, or, if the compound is a carboxylic acid, an agriculturally useful ester, thioester or amide thereof.

3. A herbicidal mixture according to claim 1 or 2, comprising as component B) dicamba.

4. A herbicidal mixture according to any of claims 1 to 3, comprising as component C) a safener selected from the group consisting of isoxadifen, mefenpyr and cloquintocet.

5. A herbicidal mixture according to any of claims 1 two 3, wherein component A) and component B) are present in a weight ratio of from 1:0.1 to 1:50.

6. A herbicidal mixture according to claim 4, wherein component A), component B) and component C) are present in a weight ratio of from 1:0.1:0.1 to 1:50:10.

7. A herbicidal composition comprising a herbicidally effective amount of a mixture according to any of claims 1 to 6, at least one inert liquid and/or solid carrier and, if desired, at least one surfactant.

8. A process for preparing herbicidal compositions according to claim 7, which comprises mixing component A, component B) and, if desired, component C), at least one inert liquid and/or solid carrier and, if desired, a surfactant.

9. A method for controlling unwanted vegetation, which comprises applying a herbicidal mixture according to any of claims 1 to 6 before, during and/or after emergence of unwanted plants, where components A), B) and, if desired, C) can be applied simultaneously, jointly or separately, or successively.

10. A method for controlling unwanted vegetation according to claim 9, wherein the leaves of crop plants and the unwanted plants are treated.

**Revendications**

1. Mélange herbicide, contenant

A) du picolinafen (I)

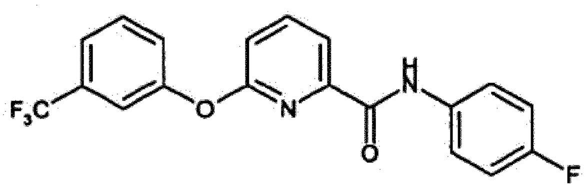

(I)

ou ses sels utilisables en agriculture, et

B) au moins un autre herbicide choisi dans le groupe des acides benzoïques en des quantités et des rapports de quantités synergiquement actifs.

**2.** Mélange herbicide selon la revendication 1, contenant comme composant B) au moins un composé herbicide du groupe formé par le chlorambène et le dicamba ;
ainsi que leurs sels utilisables en agriculture ou, pour autant qu'il s'agisse d'acides carboxyliques, leurs esters, thioesters ou amides utilisables en agriculture.

**3.** Mélange herbicide selon les revendications 1 ou 2, contenant comme composant B) du dicamba.

**4.** Mélange herbicide selon les revendications 1 à 3, contenant comme composant C) un agent protecteur choisi dans le groupe formé par l'isoxadifen, le mefenpyr et le cloquintocet.

**5.** Mélange herbicide selon les revendications 1 à 3, **caractérisé en ce que** le composant A) et le composant B) se trouvent dans un rapport pondéral de 1:0,1 à 1:50.

**6.** Mélange herbicide selon la revendication 4, **caractérisé en ce que** le composant A), le composant B) et le composant C) se trouvent dans un rapport pondéral de 1:0,1:0,1 à 1:50:10.

**7.** Agent herbicide, contenant au moins une quantité active en tant qu'herbicide d'un mélange selon les revendications 1 à 6, au moins une substance support inerte liquide et/ou solide et si souhaité au moins une substance tensioactive.

**8.** Procédé pour la préparation d'agents herbicides selon la revendication 7, **caractérisé en ce qu'**on mélange le composant A, le composant B) et si souhaité le composant C), au moins une substance support inerte, liquide et/ou solide et si souhaité une substance tensioactive.

**9.** Procédé pour lutter contre une croissance non souhaitée de plantes, **caractérisé en ce qu'**on applique un mélange herbicide selon les revendications 1 à 6 avant, pendant et/ou après l'émergence de plantes non souhaitées, les composants A), B) et si souhaité C) pouvant être appliqués simultanément, ensemble ou séparément, ou consécutivement.

**10.** Procédé pour lutter contre une croissance non souhaitée de plantes selon la revendication 9, **caractérisé en ce que** les feuilles des plantes de culture et des plantes non souhaitées sont traitées.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9407368 A
- WO 0126466 A
- WO 0135740 A
- WO 0174157 A
- WO 0078147 A
- US 5665673 A
- EP 347950 A
- WO 0215694 A
- US 200239968 B
- EP 447004 A